# EUROPEAN PATENT APPLICATION

(11) **EP 1 281 499 A1**
(43) Date of publication of application: **05.02.2003**
(21) Application number: 02078088.8
(22) Date of filing: 29.07.2002
(51) Int. Cl.: B29C 41/20, B29C 41/04, B65D 77/06, B29L 24/00, B29L 22/00, B29C 33/42

(54) **Method and set of moulds for rotational moulding of a container**

(30) Priority: 31.07.2001 NL 1018671
(71) Applicant: zweva Rotomoulding N.V., 2200 Noorderwijk-Herentals (BE)
(72) Inventor: Van 'T. Veer, Pieter, 2584 NL Den Haag (NL)
(74) Representative: Jorritsma, Ruurd

(57) **Abstract**

A method for the production of a double-walled plastic container, comprises the following steps:
- provision of the inside wall (6) of the container,
- placing the inside wall (6) of the container in an outside wall rotational mould (15), the internal surface of which determines the shape of the outside wall of the container, which internal surface of the outside wall rotational mould (15) and which inside wall are locally a relatively small distance apart (14) and beyond this a relatively large distance apart (18),
- forming the outside wall of the container in the outside wall rotational mould (15) with cohesion of the material of the outside wall and the inside wall at the location(s) (23) where they are a relatively small distance apart and leaving an open space outside that (those) location(s).

## Description

The invention relates to the production of a plastic container by means of rotational moulding. Using this technique hollow plastic articles can be produced in a relatively simple mould. To this end a quantity of powdered plastic is introduced into one half of the mould. The mould is then closed by fitting the other mould half, after which the whole is rotated about two axes in a furnace. The powdered plastic becomes hot as a result, and as a consequence of the tumbling of the mould about two axes the melting plastic deposits in a uniform layer on the inside of the mould.

After the powdered plastic has melted and has deposited, the mould is cooled; the tumbling movement is continued until the plastic layer has hardened. The mould is then opened in order to remove the product moulded in this way.

The technique of rotational moulding has been found to be suitable for the production of a wide variety of hollow articles. Articles having a double wall can also be produced. In this case, however, there is the limitation that such products having a double wall must always have a hollow shape that comes apart. This is necessary in order to be able to remove the product concerned from the mould. It is therefore also not possible, for example, to produce a double-walled storage tank for fluids and the like in one piece using the conventional mould.

The aim of the invention is to provide a method of the type described above which does make it possible to produce closed, hollow, double-walled products. Said aim is achieved by means of a method for the production of a double-walled plastic container, comprising the following steps:
- provision of the inside wall of the container,
- placing the inside wall of the container in an outside wall rotational mould, the internal surface of which determines the shape of the outside wall of the container, which internal surface of the outside wall rotational mould and which inside wall are locally a relatively small distance apart and beyond this a relatively large distance apart,
- forming the outside wall of the container in the outside wall rotational mould with cohesion of the material of the outside wall and the inside wall at the location(s) where they are a relatively small distance apart and leaving an open space outside that (those) location(s).

With the method according to the invention the double-walled hollow container is produced in two steps. In the first step the inside wall is produced in advance, for example by blow moulding or welding; the inside wall can, however, also have been produced in advance in a separate rotational moulding step. The outside wall is produced in the second step. In this context it is important that the join between the inside wall and the outside wall of the container is also produced in the second step. It is known per se to produce a join between two walls in a rotational moulding process. The powdered plastic that collects at those locations in the mould where there is a fairly narrow gap in the mould leads to fusion of the two neighbouring walls ("kiss-off"). However, in contrast to what is the case in the state of the art, with the method according to the invention this fusion takes place with a pre-produced inside wall in the mould, in such a way that a double-walled hollow product that does not come apart can be produced.

FR-A 1 058 586 discloses a method for coating a container both on the inside and on the outside. The container is placed in a rotational mould for this purpose. When carrying out the method the inside and the outside of the container are simultaneously coated with a layer of plastic. Therefore, with this known method an inside wall is not produced in advance.

The method according to the invention preferably comprises the following steps:
- forming an inside wall with an essentially uniform surface,
- using an outside wall rotational mould which has mould parts that are located a relatively small distance away from the inside wall, as well as offset mould parts a relatively large distance away from this wall.

As an alternative it is, of course, also possible for the outside wall to be uniformly smooth or flat and for the inside wall to have offset parts. Both the inside wall and the outside wall can also have offset parts.

Uniform cohesion between the outside wall and the inside wall can be obtained if the method contains the step of supporting the inside wall a uniform distance away from the internal surface of the outside wall rotational mould, such that the size of the gap between the inside wall and the mould parts of the outside wall rotational mould that are a relatively small distance therefrom is essentially uniform.

As already mentioned, the inside wall can also have been produced by rotational moulding. The invention therefore also relates to a set for use with the method described last for the production of a double-walled plastic container, which set comprises an outside wall rotational mould, the internal surface of which determines the shape of the outside wall of the container, as well as an inside wall rotational mould, the internal surface of which determines the shape of the inside wall of the container.

The outside wall rotational mould preferably has supporting means for supporting the formed inside wall a uniform distance away from the internal surface of the outside wall rotational mould.

The rotational moulds can have a wide variety of shapes. The condition is that at certain positions the rotational moulds have mould parts such that the outside wall is able to fuse with the inside wall. Mould parts which are strip-shaped or columnar are mentioned as examples.

According to a preferred embodiment, one of the rotational moulds has a uniformly shaped internal surface and the other rotational mould has first mould parts which are recessed or offset towards its interior, compared with second mould parts thereof. When used as a vessel for fluids, the inside wall is preferably flat, that is to say produced without offset mould parts. In that case the offset mould parts are only in the outside wall. According to another embodiment both moulds can also have offset parts.

To produce a vessel the rotational moulds can be essentially cylindrical; in that case the mould parts can extend in the peripheral direction and/or in the axial direction. Sloping mould parts or columnar mould parts are also possible. However, block-shaped rotational moulds are also possible.

The invention finally also relates to a double-walled plastic container having a hollow shape, which does not come apart, produced by the method described above.

The invention will now be explained in more detail with reference to an illustrative embodiment shown in the figures.

Figure 1 shows an inside wall rotational mould for the production of an inside wall of a double-walled container.

Figure 2 shows the inside wall rotational mould according to Figure 1 in the open position, containing the inside wall produced.

Figure 3 shows the inside wall.

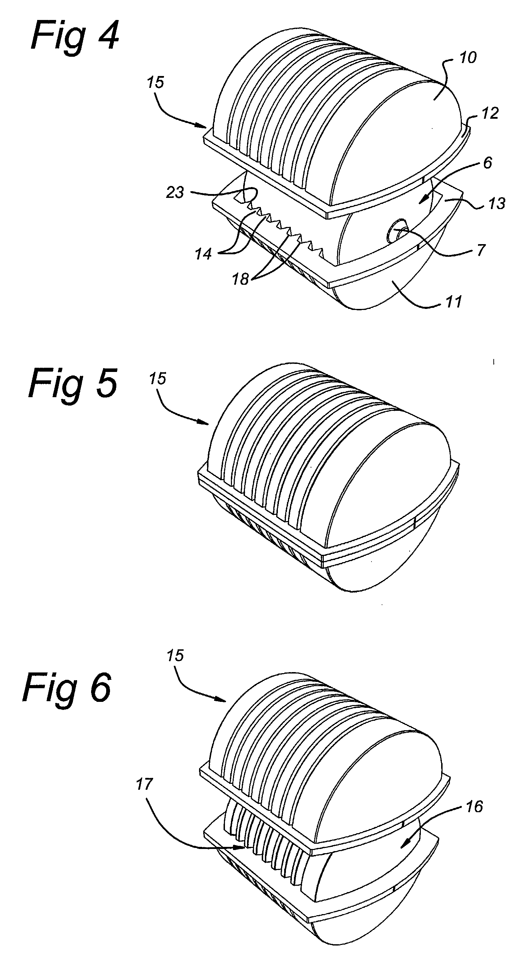

Figure 4 shows the opened outside wall rotational mould for the production of the outside wall, with the inside wall fitted in place.

Figure 5 shows the outside wall rotational mould according to Figure 4 in the closed position.

Figure 6 shows the outside wall rotational mould according to Figures 4 and 5 in the open position, with the finished container including the outside wall produced.

Figure 7 shows a perspective view of the finished container.

Figure 8 shows an axial section of the container according to Figure 7.

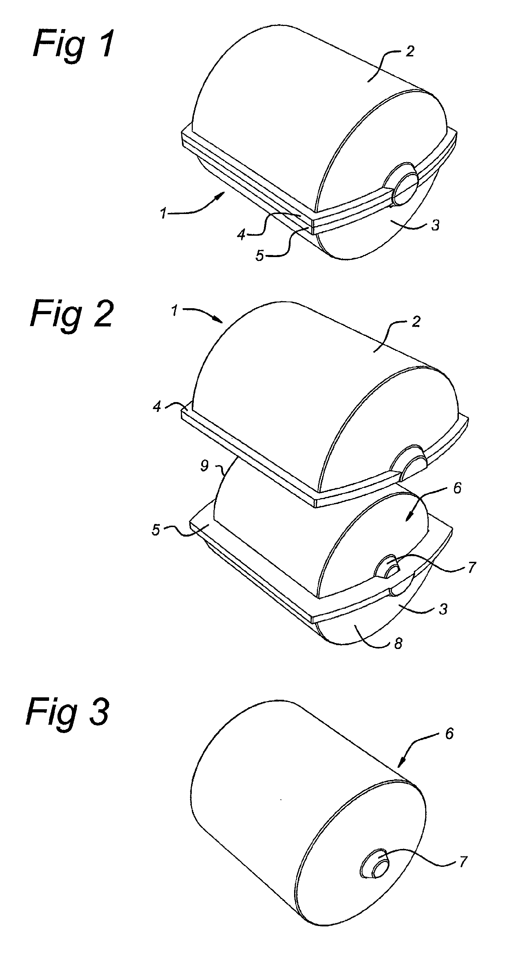

The inside wall rotational mould 1 shown in Figures 1 - 3 has an upper mould half 2 and a lower mould half 3. In the closed position these mould halves 2, 3 are fastened to one another by means of their closing edges 4, 5 producing a seal. In this position the inside wall rotational mould 1 is heated and tumbled about two mutually perpendicular axes, as a result of which the powdered plastic previously introduced into the mould melts and deposits uniformly in a layer on the inside of the inside wall rotational mould. After cooling, a product 6 that is in itself closed, in this case the inside wall of a double-wall container, is obtained. Depending on the shape of the inside wall rotational mould 1, a protuberance or column 7 is formed at the ends 8, 9 of the inside wall 6 during this operation.

The inside wall 6 is then placed in an outside wall rotational mould 15, consisting of a lower mould half 11 and an upper mould half 10, which are joined to one another by their closing edges 13, 12 producing a seal. The internal space in this outside wall rotational mould 15 is somewhat larger than the external dimensions of the inside wall 6. This inside wall 6 therefore fits in the outside wall rotational mould 15 with some play. In order to ensure that the inside wall 6 remains in the correct, centred position during the rotation process, supports (not shown) can be provided in the outside wall rotational mould 15.

A quantity of powdered plastic is introduced into the outside wall rotational mould 15 together with the inside wall 6. On rotating about two axes and heating, the outside wall 16 of the vessel, indicated in its entirety by 17, deposits on the inside of the outside wall rotational mould 15. Since the outside wall rotational mould 15 has a certain shape with mould parts 14 that are offset towards the inside with respect to the other mould parts 18, the outside wall 16 also acquires such a shape.

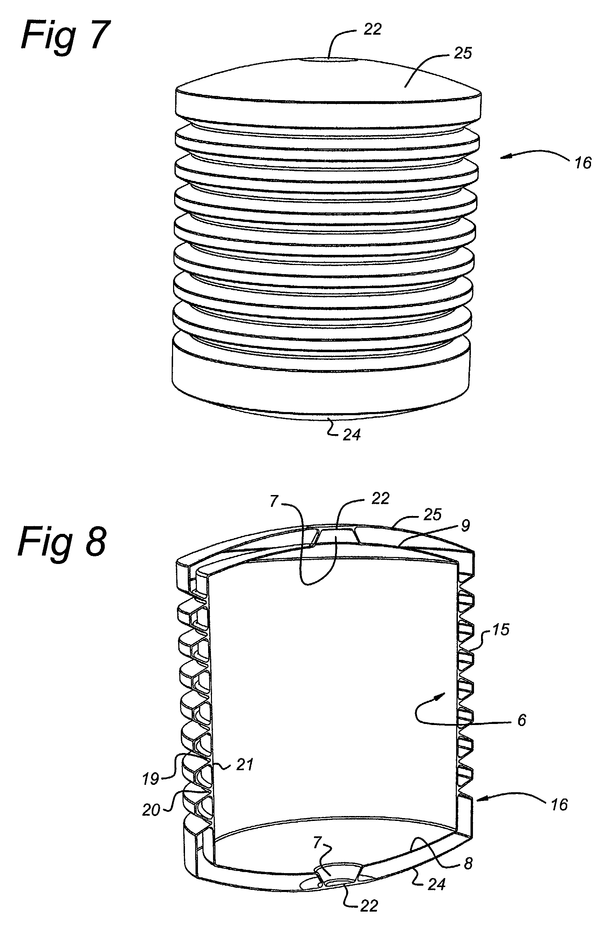

After the plastic has cooled, the vessel 17 is removed from the second, outside wall, rotational mould 15. As can clearly be seen in Figures 7 and 8, as a consequence of the shape of the outside wall rotational mould 15, ribs 20, which are enclosed by recesses 19, have been formed in the outside wall of the container 17. These recesses 19 have been formed during rotational moulding at the location of the inward-facing mould parts or ridges 14 on the outside wall rotational mould 15, which are located between the mould parts 18 thereof which are located further towards the outside. The distance between the top 23 of the ridges 14 and the inside wall 6 opposite is so chosen that fusion 21 between the outside wall 16 and the inside wall 6 takes place during rotational moulding.

At the end walls 8, 9 and 24, 25 a join is obtained by means of a columnar protuberance 7 on the inside wall 6. It would, of course, also be possible to provide columnar recesses in the outside wall 16, for example to replace the recesses 19.

## Claims

1. Method for the production of a double-walled plastic container (17), comprising the following steps:
- provision of the inside wall (6) of the container (17),
- placing the inside wall (6) of the container (17) in an outside wall rotational mould (15), the internal surface of which determines the shape of the outside wall (16) of the container (17), which internal surface of the outside wall rotational mould (15) and which inside wall (6) are locally a relatively small distance apart and beyond this a relatively large distance apart,
- forming the outside wall (16) of the container (17) in the outside wall rotational mould (15) with cohesion (21) of the material of the outside wall (16) and the inside wall (6) at the location(s) where they are a relatively small distance apart and leaving an open space outside that (those) location(s).

2. Method according to Claim 1, comprising the following steps:
- forming an inside wall (6) with an essentially uniform surface,
- using an outside wall rotational mould (15) which has mould parts (14) that are located a relatively small distance away from the inside wall (6), as well as mould parts (18) a relatively large distance away from this wall.

3. Method according to Claim 1 or 2, including the step of supporting the inside wall (6) a uniform distance away from the internal surface of the outside wall mould (15), such that the size of the gap between the inside wall (6) and the mould parts (14) of the mould (15) that are a relatively small distance therefrom is essentially uniform.

4. Method according to Claim 1, 2 or 3, comprising the production of the inside wall (6) of the container (17) in an inside wall mould (1).

5. Set for use with the method according to Claim 4 for the production of a double-walled plastic container (17), which set comprises an outside wall rotational mould (15), the internal surface of which determines the shape of the outside wall (16) of the container (17), as well as an inside wall rotational mould (1), the internal surface of which determines the shape of the inside wall (6) of the container (17).

6. Set according to Claim 5, wherein the outside wall rotational mould (15) has supporting means for supporting the formed inside wall (6) a uniform distance away from the internal surface of the outside wall rotational mould (15).

7. Set according to Claim 5 or 6, wherein at least one of the moulds (15) has mould parts (14, 18) that are offset with respect to one another in the direction towards the interior of the mould.

8. Set according to Claim 7, wherein the mould parts (14, 18) offset with respect to one another are strip-shaped.

9. Set according to Claim 7 or 6, wherein the mould parts (7) offset with respect to one another are columnar.

10. Set according to one of Claims 5 - 9, wherein one (1) of the rotational moulds has a uniformly shaped internal surface and the other (15) mould has first mould parts (14) which are recessed or offset towards its interior, compared with second mould parts (18) thereof.

11. Set according to Claim 10, wherein the rotational moulds (1, 15) are essentially cylindrical.

12. Set according to Claim 11, wherein the mould parts (14, 18) extend in the peripheral direction.

13. Set according to Claim 11 or 12, wherein the mould parts extend in the axial direction.

14. Plastic container (17) produced by means of the method according to one of Claims 1 - 4, comprising an inside wall (6) and an outside wall (16) that are joined to one another by means of moulded parts (19) which are in at least one of said inside wall (6) and the outside wall (16).

15. Container according to Claim 14, wherein the end faces (8, 9; 24, 25) of the container (17) have columnar-shaped parts (7).

16. Container according to Claim 14 or 15, wherein the longitudinal surfaces of the container have rib-shaped moulded parts (20).
